# NEUE EUROPÄISCHE PATENTSCHRIFT

(11) **EP 0 427 936 B2**
(45) Veröffentlichungstag und Bekanntmachung des Hinweises auf die Entscheidung über den Einspruch: **30.06.1999**
(45) Hinweis auf die Patenterteilung: 02.03.1994
(21) Anmeldenummer: 90117248.6
(22) Anmeldetag: 07.09.1990
(51) Int. Cl.: A01C 17/00

(54) **Schleuderdüngerstreuer**
Fertilizer broadcaster
Epandeur d'engrais centrifuge

(30) Priorität: 09.02.1990 DE 4003945; 28.06.1990 DE 4020574; 26.05.1990 DE 4017026; 27.04.1990 DE 4013532; 24.11.1989 DE 3938921; 03.11.1989 DE 3936633
(43) Veröffentlichungstag der Anmeldung: 22.05.1991
(73) Patentinhaber: Amazonen-Werke H. Dreyer GmbH & Co. KG, D-49205 Hasbergen (DE)
(72) Erfinder: Dreyer, Heinz, Dr. Dipl.-Ing., D-4507 Hasbergen (DE)
(74) Vertreter: Grünecker, Kinkeldey, Stockmair & Schwanhäusser Anwaltssozietät

(56) Entgegenhaltungen:
- EP-A- 0 158 335
- EP-A- 0 281 885
- Streutabelle für Zentrifugaldüngerstreuer AMAZONE ZA-U, DS 445*3.85

## Beschreibung

Die Erfindung betrifft einen Schleuderdüngerstreuer.

Durch die europäische Offenlegungsschrift 01 58 335 ist beispielsweise ein Schleuderdüngerstreuer bekannt geworden, der zwei Schleuderscheiben aufweist, wobei auf jeder Schleuderscheibe zwei Wurfschaufeln unterschiedlicher Länge angeordnet sind. Die Wurfschaufeln schleudern die aus dem Vorratsbehälter aber Dosierelemente den Schleuderscheiben zugeleiteten Düngemittel ab und verteilen den Dünger in Breitverteilung. Bei diesem Schleuderdüngerstreuer ist es möglich, den Abwurfwinkel der Düngerpartikel so für das Grenzstreuen zu verändern, daß die Düngerpartikel mit einem unterhalb der Horizontalebene liegenden Abwurfwinkel abgeschleudert werden Nun besteht bei den Schleuderdüngerstreuern, bei denen die Schleuderscheiben unmittelbar nebeneinander angeordnet sind, und bei denen die Wurfschaufeln aus konstruktiven Gründen nicht verlängert werden können das Problem, daß die Arbeitsbreite nicht zu vergrößern ist. Die in der gattungsbildenden Druckschrift vorgeschlagenen Maßnahmen sind zur Lösung dieses Problems nicht geeignet.

Der Erfindung liegt die Aufgabe zugrunde, hier Abhilfe zu schaffen.

Diese Aufgabe wird in erfindungsgemäßer Weise durch die Merkmale des Anspruches 1 gelöst.

Infolge dieser Maßnahmen ist es auf einfachste Weise bei den Schleuderdüngerstreuern, bei denen aufgrund der Bauweise es nicht möglich ist, die Länge der Wurfschaufeln zu vergrößern und bei denen man die Drehzahl der Schleuderscheiben nicht erhöhen will, zur Erzielung größerer Arbeitsbreiten, auf äußerst einfache und überraschende Weise möglich, größere Arbeits- und Wurfweiten zu erzielen. Hierbei kommt noch hinzu, daß in überraschender Weise die Wurfweitenabweichung und die daraus resultierenden Streubildungleichmäßigkeiten durch Querneigung bzw. Querschwankungen des Schleuderdüngerstreuers deutlich geringer werden als das Abwerfen bei etwas kleineren Abwurfwinkeln Hierbei wird außerdem auch eine Wurfweitenvergrößerung in vorteilhafter Weise erreicht, wobei die gleiche Umfangs- bzw. Abwurfgeschwindigkeit vorausgesetzt wird. Durch diese Maßnahmen wird ein optimaler Kompromiß erreicht zwischen größerer Arbeitsbreite und Windanfälligkeit. Der optimale Kompromiß wird gefunden, wenn der kleinere Abwurfwinkel für die kürzere Wurfschaufel, die den inneren Bereich abstreut, bei etwa 10° oberhalb der Horizontalen liegt, während der größere Abwurfwinkel für die längere Wurfschaufel um den äußeren Bereich und die große Wurfweite zu erreichen bei etwa 16° oberhalb der Horizontalen liegt. Weiterhin läßt sich natürlich auch das bekannte Spätdüngungsverfahren hier anwenden, wobei dann die Abwurfwinkel für die kleinere Schaufel bei etwa 20° und bei der längeren Schaufel bei 25° liegt. Der Streufächer wird durch die erfindungsgemäßen Maßnahmen nur unwesentlich angehoben, so daß die Windanfälligkeit klein bleibt, während eine größere Wurfweite optimal erreicht werden kann.

Hierbei ist in einer Ausführungsform vorgesehen, daß die Wurfschaufeln einer Schleuderscheibe unterschiedliche Längen von der Drehachse bis zu ihrer Abstreukante aufweisen, daß zumindest die längeren Wurfschaufeln gegen andere Wurfschaufeln leicht austauschbar sind, welche zumindest an ihrem äußeren Ende eine untere Leitfläche aufweisen, welche einen größeren Winkel zu Horizontalen aufweisen. Infolge dieser Maßnahmen können bei durch ihre Bauart festgelegter Länge der Wurfschaufeln dennoch größere Arbeitsbreiten durch den größeren Winkel erreicht werden.

Es ist erfindungsgemäß vorgesehen, daß die untere äußere Leitfläche der längeren Wurfschaufel mit einem größeren Winkel zur Horizontalen als die untere äußere Leitfläche der kürzeren Wurfschaufel angestellt ist. Somit weisen die unteren Leitflächen der Wurfschaufeln jeder Schleuderscheibe einen unterschiedlichen Abwurfwinkel derart auf, daß die Düngerpartikel von den Wurfschaufeln in zwei unterschiedlichen Ebenen abgeschleudert werden können, so daß die von jeder Wurfschaufel erzeugten Streufächer in übereinanderliegenden Ebenen sich befinden. Infolge dieser Maßnahmen ergibt sich ein äußerst gleichmäßiges und bzgl. Querschwankungen unanfälliges Streubild, wobei die verschiedenen Streufächer bei ihrer Ausbildung sich nicht gegenseitig behindern. Hierdurch ergibt sich ein äußerst ruhiges und gleichmäßiges Streubild. Der Dünger wird sehr gleichmäßig in bisher nicht gekannter Weise auf der Bodenoberfläche verteilt.

Durch diese erfindungsgemäße Methode wird der Streufächer gegenüber Querschwankungen des Schleppers bzw. der Maschine oder am Hang des zu bestreuenden Ackers unempfindlicher, denn diese wirken sich aufgrund der erfindungsgemäßen Maßnahmen nicht mehr sehr stark aus. Denn diese Schwankungen wirken sich gerade im Außenbereich natürlich wesentlich stärker aus als im Mittelbereich. Gleichzeitig wird der Windeinfluß so gering wie möglich gehalten, da der Streufächer durch den immer noch kleinen Winkel gegenüber der Horizontalen von ca. 10° bei der kurzen Schaufel und ca. 16° bei der langen Schaufel nicht wesentlich angehoben wird.

Der Windeinfluß wird zwar etwas größer, aber die mit der erfindungsgemäßen Maßnahme erreichte größere Arbeitsbreite und die wenigere Unanfälligkeit gegen Querschwankungen und Querneigungen wird so ein optimaler Kompromiß gefunden. Durch den etwas größeren Abwurfwinkel für die längere Wurfschaufel, die für die große Wurfweite verantwortlich ist, ergibt sich der große Vorteil, daß die Wurfweitenabweichung durch Querneigungen oder Querschwankungen bei weiterhin geringem Windeinfluß bei der großen Wurfweite sehr gering gehalten wird.

Weitere Einzelheiten der Erfindung sind den übrigen Unteransprüchen, der Beispielsbeschreibung und den Zeichungen zu entnehmen. Hierbei zeigt
- Fig. 1: einen Schleuderdüngerstreuer in Prinzipdarstellung und in der Ansicht von hinten,

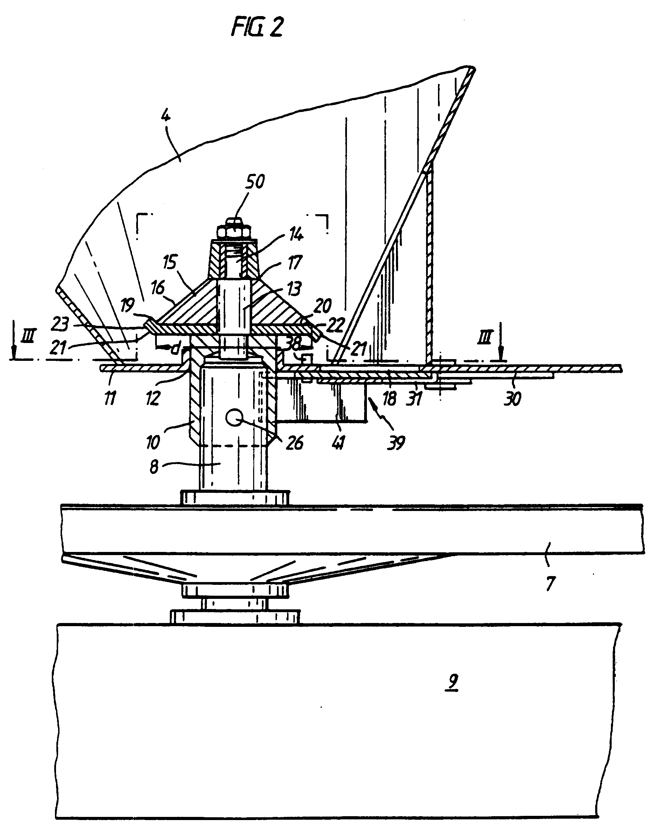

- Fig. 2: Teilansicht des in Fahrtrichtung gesehen linken Auslauftrichters in Schnittdarstellung in der Ansicht II - II und in vergrößertem Maßstab.

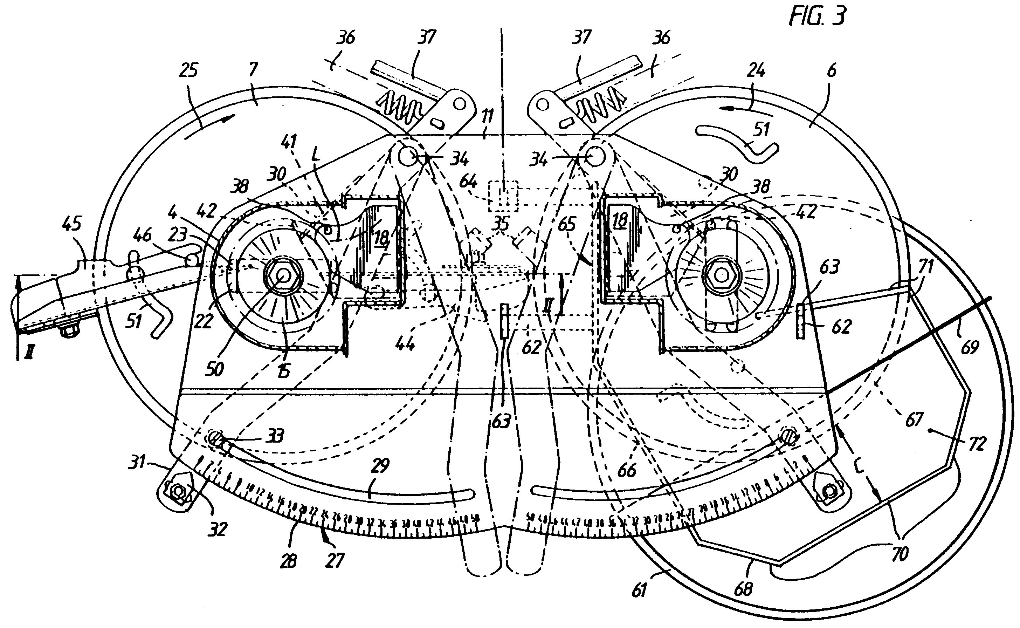

- Fig. 3: die Bodenplatte mit dem untersten Querschnitt der beiden Auslauftrichter in der Ansicht III - III, wobei sich unterhalb der in Fahrtrichtung gesehen rechten Schleuderscheibe eine Auffangvorrichtung zur Durchführung einer Abdrehprobe befindet, in einem anderen Maßstab,
- Fig. 4: eine weitere Teilansicht des in Fahrtrichtung gesehen linken Auslauftrichters in Schnittdarstellung gemäß Fig. 2, wobei ein andersartig in die Trichterspitze hineinragendes Rührorgan auf der Schleuderscheibenantriebswelle angeordnet ist,
- Fig. 5: die rechte Schleuderscheibe des Schleuderdüngerstreuers, wobei sich Wurfschaufeln für das Normalstreuen auf der Schleuderscheibe befinden, in Teilansicht und vergrößertem Maßstab,

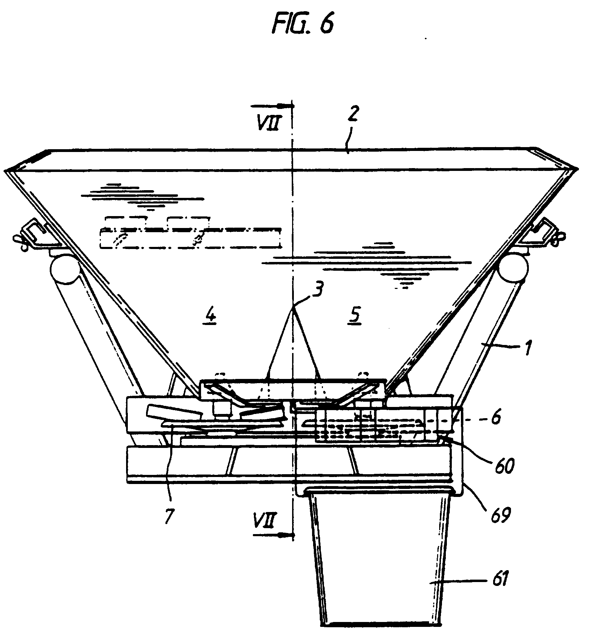

- Fig. 6: der Schleuderdüngerstreuer gemäß Fig. 1, wobei zur Durchführung einer Abdrehprobe die Wurfschaufeln der rechten Schleuderscheibe abgenommen worden sind und im Bereich dieser Schleuderscheibe eine Auffangvorrichtung für die dieser Schleuderscheibe zugeführten Düngemittel angeordnet ist,

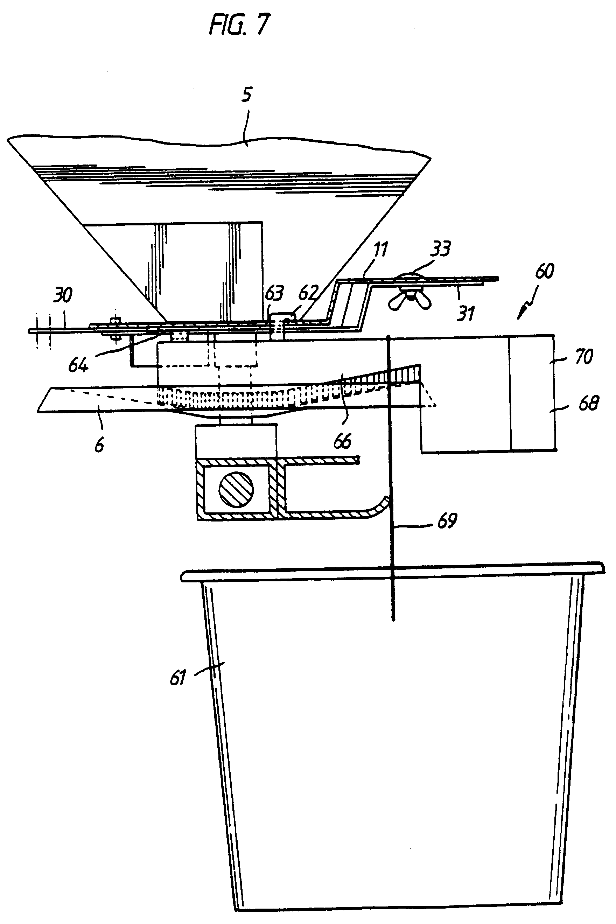

- Fig. 7: Teilansicht und Prinzipdarstellung des rechten Auslauftrichters in der Ansicht VII - VII,
- Fig. 8: Prinzipdarstellung der Schleuderscheibe gemäß Fig. 5, in verkleinertem Maßstab, wobei die lange Wurfschaufel gegen eine spezielle Grenzstreuschaufel ausgetauscht ist,
- Fig. 9: die rechte Schleuderscheibe des Schleuderdüngerstreuers, wobei beide Wurfschaufeln als spezielle Grenzstreuschaufeln ausgebildet sind,
- Fig. 10: die rechte Schleuderscheibe des Schleuderdüngerstreuers in Teilansicht und Schnittdarstellung mit der langen Wurfschaufel für das Normalstreuen, wobei sich die Wurfschaufel in der Normalstreurichtung gemäß Fig. 17 befindet,
- Fig. 11: die Schleuderscheibe mit der Wurfschaufel gemäß Fig. 10, wobei die von dieser Wurfschaufel abgeschleuderten Düngemittel durch die nach oben gegenüber der Normalstreurichtung gerichtete untere Leitfläche zum Spätdüngen abgeschleudert werden,
- Fig. 12: die rechte Schleuderscheibe des Schleuderdüngerstreuers, wobei die Normalstreuschaufel gegen die speziellle Grenzstreuschaufel ausgetauscht worden ist, wobei sich die Grenzstreuschaufel in Normalstreurichtung befindet,
- Fig. 13: die Schleuderscheibe und die Wurfschaufel gemäß Fig. 12, wobei die untere Leitfläche der Wurfschaufel gegenüber der Normalstreurichtung zum Spätdüngen nach oben gerichtet ist,
- Fig. 14: Teilansicht und Schnittdarstellung der rechten Schleuderscheibe mit der langen Wurfschaufel für das Normalstreuen, wobei die äußere, untere Leitfläche erfindungs gemäß einen Vorwinkel gegenüber der Wurfschaufel gemäß Fig. 10 aufweist,
- Fig. 15: die Schleuderscheibe und die Wurfschaufel gemäß Fig. 14, wobei sich die untere Leitfläche zum Spätdüngen in nach oben gerichteter Position befindet,
- Fig. 16: die rechte Schleuderscheibe des Schleuderdüngerstreuers mit den Wurfschaufeln für das Normalstreuen, wobei die lange Wurfschaufel einen Vorwinkel entsprechend der Wurfschaufel gemäß Fig. 14 und die kurze Wurfschaufel entsprechend der Wurfschaufel gemäß Fig. 10 ausgebildet ist und
- Fig. 17: Prinzipdarstellung von Auswirkung der Veränderung der Abwurfwinkel bei der langen Wurfschaufel (Vorwinkel).

Der Schleuderdüngerstreuer weist den Rahmen 1 und den Vorratsbehälter 2 auf. Auf der Vorderseite des Rahmens 1 sind in bekannter und daher nicht näher dargestellter Weise Dreipunktkupplungselemente zum Anbau des Schleuderdüngerstreuers an den Dreipunktkraftheber eines Schleppers angeordnet. Der Vorratsbehälter ist durch das dachförmige Mittelteil 3 in seinem unteren Bereich in die beiden Auslauftrichter 4 und 5 aufgeteilt. Unterhalb der Auslauftrichter 4 und 5 befindet sich jeweils die rotierend angetriebene Schleuderscheibe 6 bzw. 7, die auf den Getriebeausgangswellen 8 des Zahnradgetriebes 9 angeordnet sind und ineinander entgegengesetztem Drehsinn rotierend von einer Kraftquelle, beispielsweise eines Ölmotors oder der Zapfwelle des den Schleuderdüngerstreuer tragenden Schleppers, angetrieben werden. Die Schleuderscheibenantriebswellen 8 sind mittels des jeweiligen Wellenstückes 10, welches auf die Getriebeausgangswellen 8 aufgesetzt ist, durch die sich in der Bodenplatte 11 befindliche Durchtrittsöffnung 12 bis in die jeweilige Auslauftrichterspitze 4 bzw. 5 des Vorratsbehälters 2 hineingeführt. Auf der Oberseite des Wellenstückes 10 ist der Bolzen 13 mit gegenüber dem Wellenstück 10 reduziertem Durchmesser befestigt. Am Ende des Bolzens 13 befindet sich der ebenfalls einen reduzierten Durchmesser aufweisende Schraubbolzen 14. Mit dem Schraubbolzen 14 ist das Rührorgan 15 befestigt.

Dieses Rührorgan 15 besteht aus dem etwa rotationssymmetrischen Zubringerkörper 16, der kegel- oder kegelstumpfförmig mit seiner Spitze 17 nach oben weisend ausgebildet ist, und dessen größter Durchmesser d bis in die Nähe der in der Bodenplatte 11 sich befindlichen Auslauföffnung 18 reicht. Unterhalb des rotationssymmetrischen Zubringerkörpers 16 befindet sich der rotierende Ausweder 19. Dieser Auswerfer 19 ist aus Stahl, vor zugsweise aus einem hochfesten und/oder nichtrostendem Stahl hergestellt und auswechselbar auf der Antriebswelle 8, d. h. auf dem Bolzen 13 des Wellenstückes 10 angeordnet. Hierbei greift der Auswerfer 19 in die auf der Unterseite 20 des Zubringerkörpers 16 aufweisenden Aussparungsnut ein. Dieser unterhalb des Zubringerkörpers 16 angeordnete Auswerfer 19 überragt den Zubringerkörper 16 beidseitig auf diametral gegenüberliegenden Seiten mit kleinen Abständen, wobei der Auswerfer 19 in seinem den Zubringer überragenden Bereich horizontal und rechtwinklig zur Antriebswelle 8 ausgebildet ist. Der über den größten Bereich des Zubringerkörpers 16 jeweils überstehende Bereich 21 weist die beiden Auswerferfinger 22 und 23 auf, wobei der eine Auswerferfinger 22 nach oben und der andere Auswerferfinger 23 nach unten abgebogen ist. Um den Auswerfer 19 vor Beschädigungen durch sich im Dünger befindliche harte Gegenstände, z. B. Steine, zu schützen, ist der Auswerfer 19 elastisch und entgegen der Drehrichtung 24 bzw. 25 ausweichbar auf der Antriebswelle, d. h. auf dem mittels des Stiftes 26 drehfest mit der Antriebswelle 8 verbundenen Wellenstück 10, angeordnet.

Der unterhalb des rotationssymmetrischen Zubringerkörpers 16 sich befindliche Auswerfer 19 überstreicht die Auslauföffnung 18 in dem den Rührorgan 15 benachbarten Teil des untersten Querschnittes der Auslauftrichter 4 bzw. 5. Mittels des Rührorgans 15 werden die sich im Vorratsbehälter 2 befindlichen Düngemittel der jeweiligen, in der Bodenplatte 11 sich befindlichen Auslauföffnung 18 zugeführt. Diese, die Auslauftrichter 4 und 5 nach unten verschließende Bodenplatte 11 ist durchgehend ausgebildet und weist auf der Rückseite 27 die beiden spiegelbildlich nebeneinander liegenden, etwa horizontal angeordneten Einstellskalen 28 auf. Vor diesen Einstellskalen 28 befinden sich auf der Rückseite des Vorratsbehälters 2 die etwa horizontal nebeneinanderliegenden und spiegelbildlich ausgebildeten Langlöcher 29 in der einstückig ausgebildeten Bodenplatte 11. Die Einstellskalen 28 und die Langlöcher 29 befinden sich in dem stufenförmig nach oben abgewinkelten Bereich der Bodenplatte 11. Diese Einstellskalen 28 dienen zum Einstellen der gewünschten Ausbringmenge des Schleuderdüngerstreuers, d. h. der Öffnungsweite der von den Schiebern 30 in unterschiedlichen Öffnungsweiten einstell- und verschließbaren Auslauföffnungen 18. Die jeweils gewünschte Ausbringmenge läßt sich über den Öffnungsquerschnitt der Auslauföffnungen 18 einstellen, wobei ein bestimmter Öffnungsquerschnitt einer ganz bestimmten Ausbringmenge unter Berrncksichtigung der jeweils sich im Vorratsbehälter befindlichen Düngersorte entspricht. Das Einstellen des Öffnungsquerschnittes erfolgt in der Weise, daß zunächst der Anschlaghebel 31 auf einen bestimmten Skalenwert der Einstellskala 28 eingestellt wird, wobei der eingestellte Wert sich am Zeiger 32 des Anschlaghebels 31 ablesen läßt. Dieser Einstellwert wird z. B. einer Streutabelle entnommen. Nachdem der Zeiger 32 auf einen bestimmten Einstellwert eingestellt wurde, wird der Anschlaghebel 31 in dieser Position mittels der mit dem Langloch 29 zusammenwirkenden Einstellschraube 33 an der Bodenplatte 11 befestigt. Der Anschlaghebel 31 ist ebenso wie der Schieber 30 um den Drehpunkt 34 verschwenkbar an der Bodenplatte 11 angelenkt. Der jeweilige Anschlaghebel 31 dient als Anschlagelement für den Schieber 30, wobei der Schieber 30 an dem als Anschlag 35 ausgebildeten Winkelstück zur Anlage kommt, so daß der eingestellte Öffnungsquerschnitt der Auslauföffnungen 18 immer wieder exakt und in fehlerlos wiederholbarer Weise einstellbar ist, wobei die Feder 36 den Schieber 30 gegen das Anschlagelement 35 zieht. Soll die Auslauföffnung 18 geschlossen werden, wird der Hydraulikzylinder 37 mit Drucköl beaufschlagt, so daß der Schieber 30 in seine Schließstellung überführt wird. Der Anschlaghebel 31 läßt sich über den Bereich des jeweiligen Langloches 29 verstellen. Der jeweilige Schieber 30 weist auf seiner der Auslauföffnung 18 und der dem Vorratsbehälterinnenraum zugewandten Seite im Bereich der kleinsten Öffnungsweite der Auslauföffnung 18 das Verdränger- und/oder Aufbrechelement 38 auf, welches bei Betätigung der jeweiligen Schiebern 30 zum Zerstören von sich evtl. aufgebauten Brückenbildungen dient.

Auf der Unterseite 39 des jeweiligen Schiebers 30 direkt unterhalb ihrer Öffnungskante 40, ist eine senkrecht nach unten verlaufende Ablenkplatte 41 angeordnet, die in Drehrichtung 24 bzw. 25 der jeweiligen Schleuderscheibe 6 bzw. 7 gesehen an ihrem Ende eine zum Schleuderscheibenrand weisende Abkantung 42 aufweist. Diese Ablenkplatte 41 mit der Abkantung 42 gewährleistet eine exakte Düngeraufgabe des durch die jeweilige Auslauföffnung 18 hindurchrieselnden Düngers auf die jeweilige Schleuderscheibe 6 bzw. 7. Die Ausbildung der jeweiligen Auslauföffnung 18 ist in Verbindung mit den Schiebern 30 derart ausgebildet, daß sich ausgehend von dem geschlossenen Zustand der Auslauföffnung 18, bei Vergrößerung des Auslaufquerschnittes der Auslauföffnung 18 durch Verstellung des jeweiligen Schiebers 30, der Aufgabeschwerpunkt des durch die Auslauföffnung 18 hindurchrieselnden Düngers auf jeder Schleuderscheiber 6 bzw. 7 auf einer derarten Linie L verlagert, die über den gesamten Öffnungsquerschnitt der Auslauföffnung 18 in Richtung auf den äußeren Rand der jeweiligen Schleuderscheibe 6 bzw. 7 verläuft. Hierdurch wird der Mengeneffekt ausgeschaltet und eine exakte Verteilung des Düngers über die gesamte Arbeitsbreite des Schleuderdüngerstreuers gewährleistet.

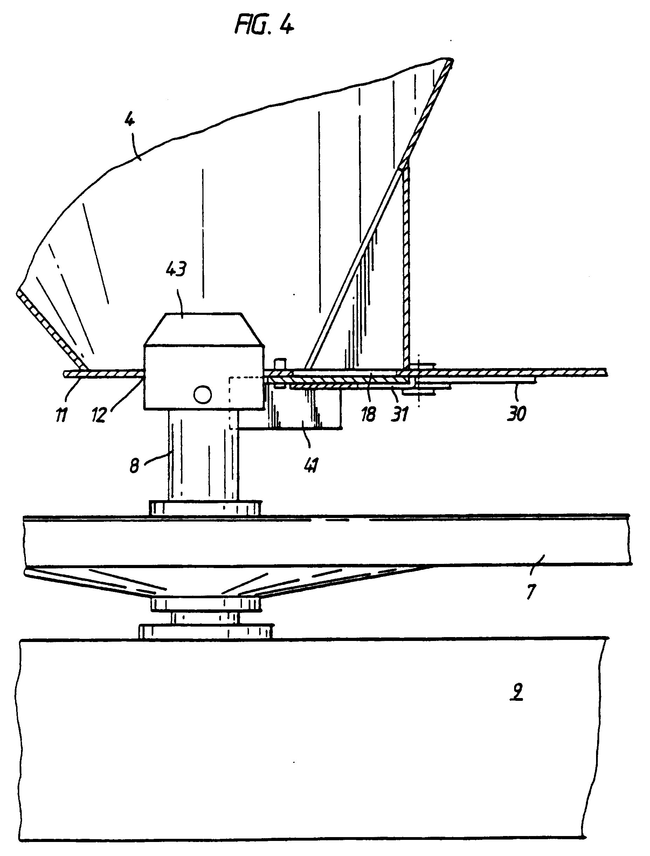

Die sich in der Bodenplatte 11 befindliche Durchtrittsöffnung 12 kann auch gemäß Fig. 4 ausgebildet sein, wobei das Rührorgan 43 von unten durch die Durchtrittsöffnung 12 bis in das Innere der Auslauftrichter 4 bzw. 5 hineinragt.

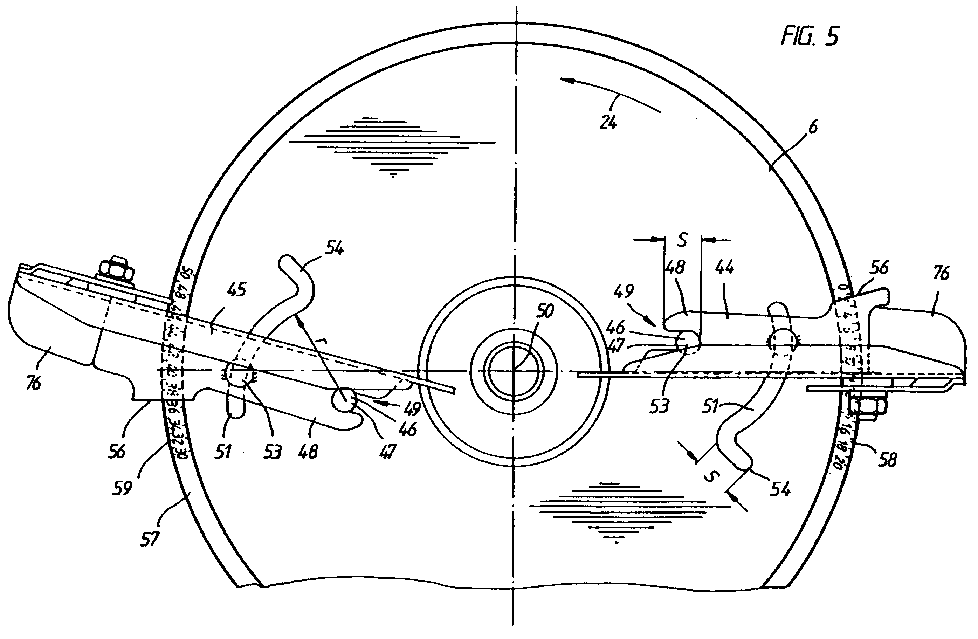

Die sich im Vorratsbehälter 2 befindlichen Düngemittel werden den Schleuderscheiben 6 bzw. 7 über die in unterschiedlichen Öffnungsweiten einstell- und verschließbaren Auslauföffnungen 18 zugeführt. Mittels der auf den Schleuderscheiben 6 bzw. 7 gemäß Fig. 5, wobei nur die rechte Schleuderscheibe 6 dargestellt ist, angeordneten, winkelverschwenkbaren Wurfschaufeln 44 und 45 wird der auf der jeweiligen Schleuderscheibe 6 bzw. 7 auftreffende Düngemittelstrom gleichmäßig über genau einstellbare Arbeitsbreite des Schleuderdüngerstreuers abgeschleudert. Die Wurfschaufel 44 weist eine kürzere Länge als die Wurfschaufel 45 auf, so daß die kürzere Wurfschaufel 44 die Düngemittelpartikel weiter nach innen, also in den inneren Bereich der Arbeitsbreite abschleudert und die längere Wurfschaufel 45 die Düngemittelpartikel weiter nach außen, also in den äußeren Bereich der Arbeitsbreite bzw. Streubreite abschleudert.

Jede Wurfschaufel 44 bzw. 45 ist um den inneren Bolzen 46 verschwenkbar auf der Scheuderscheibe 6 bzw. 7 befestigt. Dieser Bolzen 46 weist einen gegenüber dem Bolzen einen größeren Durchmesser aufweisenden Kopf 47 auf. Auf diesen Bolzen 46 ist die jeweilige Wurfschaufel 44 bzw. 45 mittels des sich im unteren Steg 48 befindlichen, in radialer Richtung verlaufenden Schlitz 49 aufschiebbar. Dieser Schlitz 49 befindet sich auf der der Drehachse 50 Zugewandten Seite der Wurfschaufel und ist auf der inneren Seite nach außen offen. Im äußeren Bereich der Wurfschaufel 44 bzw. 45 sind über den Schwenkbereich der Wurfschaufeln 44 bzw. 45 mit dem Radius r gekrümmte Langlöcher 51 angeordnet. Durch diese Langlöcher 51 ist jeweils die mit dieser Knebelschraubenmutter 52 zusammenwirkende Schraube 53 gesteckt, die beispielsweise mit der jeweiligen Wurfschaufel 44 bzw. 45 verschweißt ist. Damit sich nun die um den Bolzen 46 verschwenkbaren Wurfschaufeln 44 bzw. 45 montieren bzw. demontieren lassen, weist das jeweilige Langloch 51 an dem einen Ende des Langloches 51 eine sich immer in radialer Richtung bzw. von der Tangentialen abweichenden Richtung eine Langlochverlängerung 54 auf. Die Länge 1 der Langlochverlängerung 54 entspricht der Schlitzlänge S des sich im unteren Steg befindlichen, in radialer Richtung verlaufenden Schlitzes 49.

Nach dem Lösen der sich auf der Unterseite 55 der Schleuderscheibe 6 bzw. 7 befindlichen Knebelschraubenmutter 52 läßt sich die jeweilige Wurfschaufel 44 bzw. 45 über den durch die Länge des jeweiligen Langloches 51 sich ergebenen Schwenkbereiches zur Anpassung der jeweils vorherrschenden Einsatzbedingungen, d.h., der jeweils auszustreuenden Düngersorte bzw. der gewünschten Arbeitsbreite verschwenken. Hierbei ist der untere Steg 48 als Zeigerelement 56 ausgebildet und wirkt mit der den jeweiligen Wurfschaufeln 44 bzw. 45 zugeordneten, sich auf dem schräg nach unten umgebogenen Rand 57 sich befindlichen Einstellskalen 58 bzw. 59 zusammen. Hierbei ist die Einstellskala 58 der kürzeren Wurfschaufel 44 zugeordnet und weist die Symbole niedrigerer Rangordnung auf, da diese kürzere Wurfschaufel 44 die der jeweiligen Schleuderscheibe 6 bzw. 7 zugeführten Düngemittelpartikel weiter nach innen, also in den inneren Bereich der Arbeitsbreite bzw. Streubreite abschleudern. Die Einstellskala 59 weist die Symbole höherer Rangordnung auf und ist der längeren Wurfschaufel 45 zugeordnet, die die Düngemittelpartikel weiter nach außen, also in den äußeren Bereich der Arbeitsbreite des Schleuderdüngerstreuers abschleudern.

Die Anordnung unterschiedlich langer Wurfschaufeln 44 bzw. 45 auf der jeweiligen Schleuderscheibe 6 bzw. 7 gewährleistet, daß die Düngemittelpartikel gleichmäßig über die gesamte Arbeitsbreite verteilt werden. Die Anstellwinkel der Wurfschaufeln 44 bzw. 45 lassen sich unterschiedlich einstellen, in dem die Wurfschaufeln um den Drehpunkt, der von dem Bolzen 46 gebildet wird, nach Lösen der als Schnellverschluß ausgebildeten Knebelschraubenmutter 52, verschwenkt werden. Um nun bei einer ganz gestimmten Düngersorte unter Berücksichtigung der speziellen Streuguteigenschaften des auszustreuenden Düngers, eine ganz bestimmte Arbeitsbreite mit einer gleichmäßigen Düngerverteilung zu erzielen, ist es erforderlich, daß die Wurfschaufeln 44 bzw. 45 zur Erzeugung eines optimalen Streubildes, ohne Über- oder Unterdüngung einzelner Bereiche, entsprechend eingestellt werden. Aus diesem Grunde sind die Skalen 58 und 59 mit unterschiedlichen Markierungen bzw. Symbolen ausgebildet. Hierdurch wird gewährleistet, daß die Wurfschaufeln 44 bzw. 45 unverwechselbar einstellbar sind, d.h., es ist nicht möglich, die aus der Streutabelle entnommenen Einstelldaten, die einer ganz bestimmten Wurfschaufel zugeordnet sind, fälschlicher Weise auf eine andere Wurfschaufel zu übertragen.

Soll nun beispielsweise eine ganz bestimmte Düngersorte über eine Streubreite von 16 m verteilt werden, so sind in der Streutabelle für den Schleuderdüngerstreuer, welche zu dem Düngerstreuer mitgeliefert wird, die Einstelldaten für die winkelverschwenkbaren Wurfschaufeln enthalten. Hierfür ist dann in der Streutabelle beispielsweise die Einstellung 2/37 angegeben. D.h., daß die kürzere Wurfschaufel 44 auf den Wert 2 und die längere Wurfschaufel 45 auf den Wert 37 der Einstellskalen 58 bzw. 59 einzustellen sind, wie dies beispielhaft in Fig. 5 dargestellt ist.

Da sich die spezifischen Streuguteigenschaften des auszustreuenden Düngers von Charge zu Charge und der Witterungsverhältnisse etc. gegenüber den in der Streutabelle enthaltenen Werten verändern können, ist es empfehlenswert, daß der Landwirt vor Beginn der Streuarbeit auf dem Feld eine Streuprobe mit einem nicht dargestellten mobilen Prüfstand durchführt. Mit Hilfe dieses mobilen Prüfstandes läßt sich die Arbeitsbreite und die gleichmäßige Düngerverteilung überprüfen. Wird nun festgestellt, daß beispielsweise im Außenbereich zu viel Dünger geworfen wird, so daß die Arbeitsbreite an sich zu groß eingestellt ist, so ist es erforderlich, daß die längere Wurfschaufel 45 auf einen Wert eingestellt wird, der einer kleineren Arbeitsbreite entspricht. Hierzu werden dann nach der erfindungsgemäßen Lösung die längeren Wurfschaufeln 45 anhand der Einstellskala 59 auf einen niedrigeren Wert eingestellt. Ist jedoch im Außenbereich zu wenig Dünger vorhanden, so daß an sich eine zu kleine Arbeitsbreite erreicht wird, so sind die längeren Wurfschaufeln 45 auf einen größeren Wert einzustellen. Ebenfalls wird dann entsprechend Verfahren, wenn in der Mitte der Arbeitsbreite zu wenig oder zu viel Dünger ausgebracht wird, so daß dann die kürzeren Wurfschaufeln 44 entsprechend zurück oder vorgeschwenkt werden müssen. Werden die Wurfschaufeln 44 bzw. 45 anhand der Skalen 58 bzw. 59 auf größere Zahlenwerte eingestellt, sind größere Wurfweiten erreichbar. Werden die Wurfschaufeln 44 bzw. 45 durch einen kleineren Wert anhand der jeweiligen Skala 58 bzw. 59 eingestellt, wird der Dünger weiter nach innen geworfen, also eine kleinere Wurfweite erreicht, so daß sich insgesamt für die gewünschte Arbeitsbreite eine gleichmäßige Düngerverteilung ergibt. Dieses ist für den Landwirt sehr einfach nachzuvollziehen, denn grundsätzlich heißt es, ein kleinerer Einstellwert bedeutet auch eine kleinere Arbeitsbreite, während ein größerer Einstellwert eine größere Arbeitsbreite bedeutet.

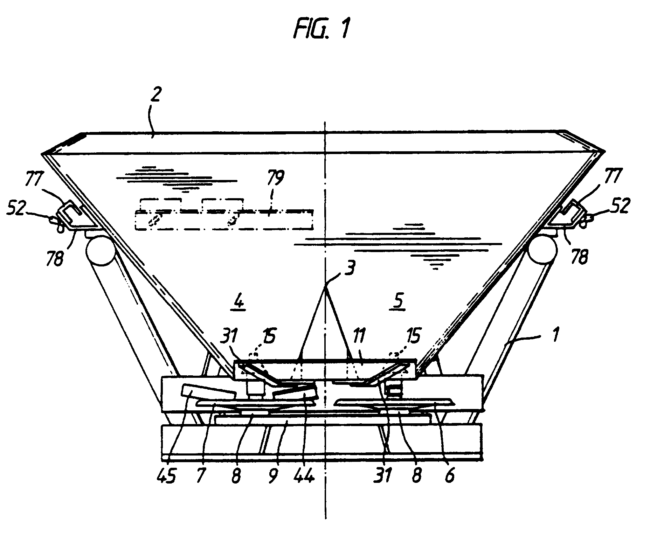

Damit sich nun bei dem Schleuderdüngerstreuer gemäß Fig. 1 eine Abdrehprobe oder Mengenkontrolle zur Ermittlung der vom Dosiermechanismus, der von den Auslauföffnungen 18 und den Schiebern 30 gebildet wird, der der Schleuderscheibe 6 zudosierten Düngermenge pro Flächeneinheit durchzuführen läßt, werden von der Schleuderscheibe 6 die Wurfschaufeln 44 bzw. 45 abgenommen. Hierzu wird die jeweilige Knebelschraubenmutter 52 entfernt und die Wurfschaufeln 44 und 45 lassen sich nach dem Verschwenken der an den Wurfschaufeln 44 bzw. 45 befestigten Schrauben 53 in den Bereich der Langlochverlängerung 54 auf einfachste weise von der Schleuderscheibe 6 abnehmen. Nach Abnahme der Wurfschaufeln 44 bzw. 45 von der Schleuderscheibe 6 wird die Düngerauffangvorrichtung 60 an den Schleuderdüngerstreuer befestigt. Hierzu wird die Düngerauffangvorrichtung 60 von unten mittels der Halterungen 62 in den Langlochschlitzen 63 der Bodenplatte 11 befestigt und stützt sich mit der Stützvorrichtung 64 von unten gegen die Bodenplatte 11 ab. Die Düngerauffangvorrichtung 60 weist im äußeren Bereich 65 der aus der Auslauföffnung 18 und dem Schieber 1 bestehenden Dosiervorrichtung einen auf der Schleuderscheibe 6 zumindest annähernd aufliegenden bzw. dicht oberhalb der Schleuderscheibe 6 befindlichen und sich von vorne nach hinten erstreckenden, als Abstreifvorrichtung 66 ausgebildeten Führungsschirm aus, der hinten über den Schleuderscheibenrand 67 übersteht. Unterhalb der Schleuderscheibe 6 und dem Ende 68 der Abstreifvorrichtung 66 ist der Auffangbehälter 61 über den Bügel 69 an der Düngerauffangvorrichtung 60 aufgehängt. Am Ende 68 der Abstreifvorrichtung 66 schließt sich im Abstand C zu dem Schleuderscheibenrand 67 der Leitschirm 70 an, der etwa bogenförmig um einen Teil der Schleuderscheibe 6 geführt ist. Desweiteren ist in Drehrichtung 24 der Schleuderscheibe 6 gesehen in einem Abstand von der Schleuderscheibendrehachse 50 in etwa radialer Richtung oder in einem spitzen Winkel von der von der Radialen abweichenden Richtung bis über den Schleuderscheibenrand 67 nach außen sich erstreckende Düngerableitwand 71 angeordnet, welche mit ihrem unteren Rand auf der Schleuderscheibe 6 zumindest annähernd aufliegt bzw. sich bis dicht oberhalb der Schleuderscheibe 6 erstreckt. Die Düngerableitwand 71 schließt sich unmittelbar an den Leitschirm 70 an.

In Draufsicht gesehen ist zwischen dem Schleuderscheibenrand 67 und dem Leitschirm 70 eine Öffnung 72 vorgesehen, durch welche der von der Schleuderscheibe 6 durch Zentrifugalkraft und/oder von der Düngerauffangvorrichtung 60, welche von der Abstreifvorrichung 66 und dem Düngerableitelement 71 gebildet wird, abgeleitete Dünger in den Düngerauffangbehälter 61 geleitet.

Die Funktionsweise der Düngerauffangvorrichtung 60 läßt sich wie folgt beschreiben: Zur Ermittlung der der Schleuderscheibe 6 zudosierten Düngermenge pro Flächeneinheit wird die Düngerauffangvorrichtung 60 in der vorbeschriebenen Weise an der Bodenplatte 11 befestigt, nach dem die Wurfschaufeln 44 bzw. 45 der Schleuderscheibe 6 demontiert worden sind. Zunächst wird der Antrieb der Schleuderscheiben 6 und 7 eingeschaltet, so daß die Schleuderscheiben 6 und 7 in entgegengesetzter Drehrichtung zueinander angetrieben werden. Anschließend wird während einer bestimmten Zeit die der Schleuderscheibe 6 zugeordnete Auslauföffnung 18 in bestimmter Größe durch den Schieber 30 geöffnet, während die der Schleuderscheibe 7 zugeordnete Auslauföffnung 18 verschlossen bleibt. Der durch die Auslauföffnung 18 austretende und auf die Schleuderscheibe 6 auftreffende Dünger wird durch das Abstreifelement 66 bis über den Schleuderscheibenrand 67 dem Düngerauffangbehälter 61 zugeleitet. Damit evtl. relativ stark beschleunigter Dünger nicht über den Rand des Auffangbehälters 61 hinausfällt, wird dieser Dünger von dem Leitschirm 70 aufgefangen und in den Auffangbehälter 61 geleitet. Sollte evtl. aufgrund der nicht ausreichenden Zentrifugalkraft der Dünger nicht bis über den Schleuderscheibenrand 67 in den Auffangbehälter 61 gelangen, wird dieser sich dann noch auf der Schleuderscheibe 6 befindliche Dünger von der Düngerableitwand 71 von der Schleuderscheibe abgeleitet und dem Auffangbehälter 61 zugeleitet.

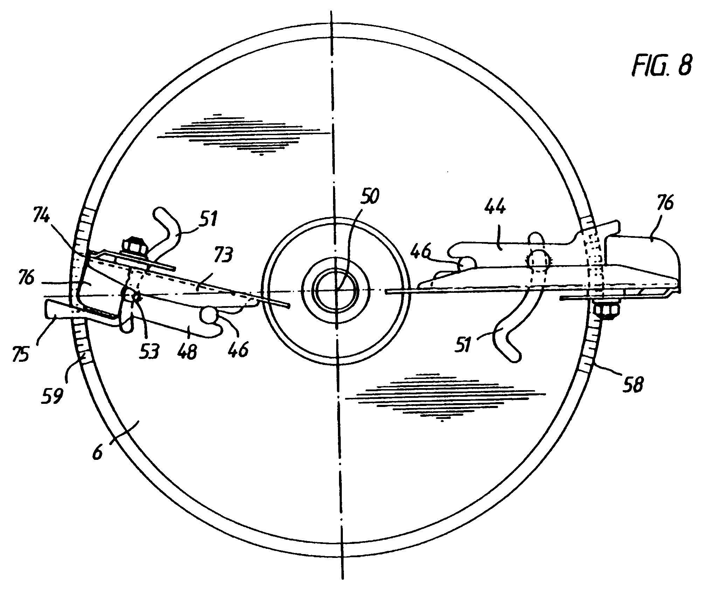

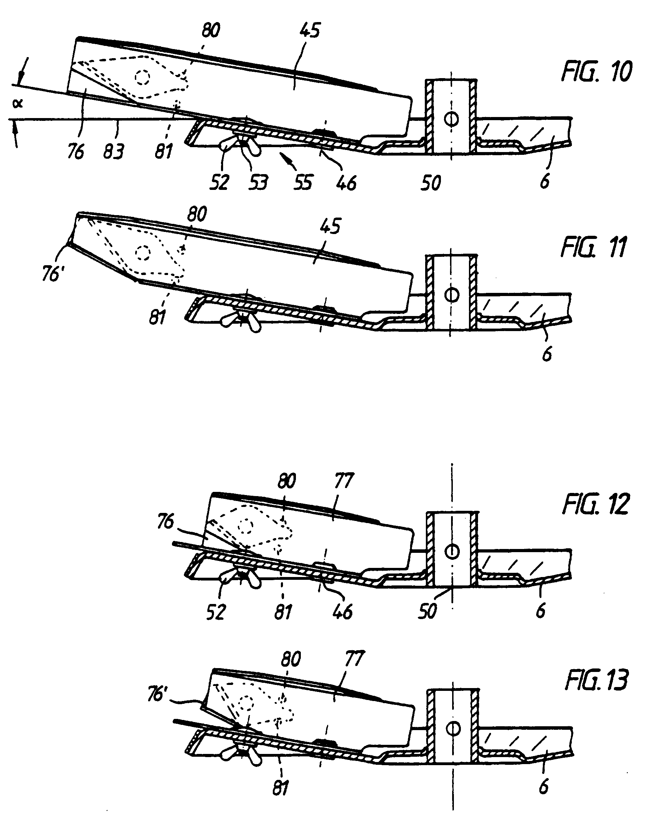

Um den Schleuderdüngerstreuer zum Grenzstreuen einsetzten zu können, wird die lange Wurfschaufel 45 entsprechend Fig. 5 gegen die Grenzstreuschaufel 73 entsprechend Fig. 8 ausgetauscht. Mittels der Grenzstreuschaufel 73, die mit ihrem Abstreuende 74 einen kürzeren Abstand zur Drehachse 50 als die lange Wurfschaufel 45 aufweist, und der kurzen Wurfschaufel 44 wird beim Grenzstreuen ein Streubild mit einer seitlich steil abfallenden Streuflanke erzielt; d.h., daß auf der rechten Seite des Schleuderdüngerstreuers bis zum Feldrand der Dünger mit gleichbleibender Streustärke bis an den Feldrand herangeworfen wird, und daß auf der linken Seite weiterhin ein flach abfallendes Streubild erhalten bleibt. Zum Austausch der langen Wurfschaufel 45 gegen die Grenzstreuschaufel 73 wird die Knebelschraubenmutter 52 auf dem Schraubbolzen 53 gelöst und von dem Schraubbolzen abgenommen. Dann wird die Wurfschaufel 45 ganz zu der Seite des Langloches 51 verschwenkt, auf der sich die Langlochverlängerung 54 befindet. Nun wird die Wurfschaufel 45 nach außen gezogen und anschließend von der Schleuderscheibe 6 abgenommen. Anschließend wird die Grenzstreuschaufel 73 auf der Schleuderscheibe 6 montiert. Nachdem die Knebelschraube 52 auf den Schraubbolzen 53 der Grenzstreuschaufel 73 aufgeschraubt ist, wird die Grenzstreuschaufel 73 in die in der Streutabelle angegebene Position verschwenkt; d.h., mit Hilfe des Zeigers 75 wird die Grenzstreuschaufel 73 auf dem in der Streutabelle angegebenen Wert für die entsprechende Arbeitsbreite eingestellt. Am äußeren Ende der Grenzstreuschaufel 73 ist der Schwenkflügel 76 in aufrechter Ebene verschwenkbar und in zwei Positionen einstellbar angeordnet. Die untere Position ist für die Normaldüngung und die obere Position, wie in Fig. 13 dargestellt, für die Spätdüngung vorgesehen.

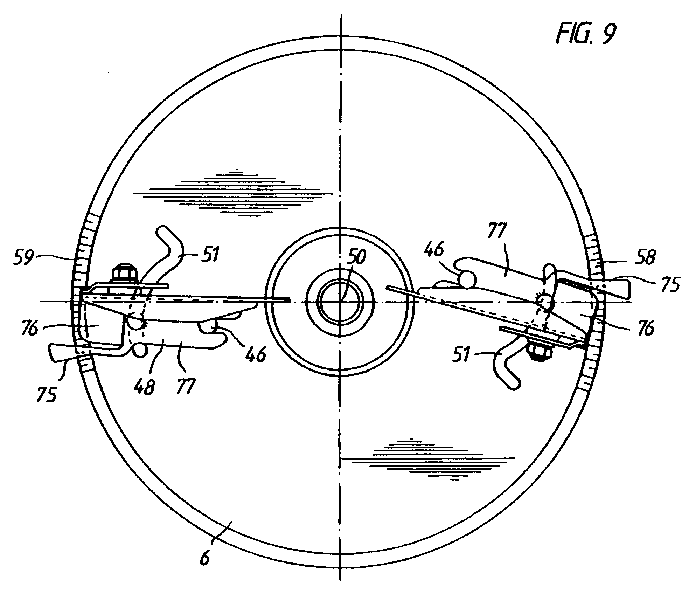

In einem weiteren Ausführungsbeispiel gemäß Fig. 9 werden zum Einsatz des Schleuderdüngerstreuers zum Grenzstreuen die beiden Wurfschaufeln 44 und 45 gemäß Fig. 5 für das Normalstreuen gegen die beiden Grenzstreuschaufeln 77 ausgetauscht. Dieser Austausch geschieht wie bereits für die Grenzstreuschaufel 73 gemäß Fig. 8 beschrieben. Die Grenzstreuschaufeln 77 gemäß Fig. 9 werden auf die gleichen Skalenwerte der Skalen 58 und 59 wie die Normalstreuschaufeln 44 und 45 bei gleicher Arbeitsbreite und Düngersorte eingestellt. Mittels des Schnellverschlusses 52 sind also die Wurfschaufeln 44 und 45 für das Normalstreuen auf einfachste Weise gegen die Grenzstreuschaufeln 77 auswechselbar auf der Schleuderscheibe 6 angeordnet. Auch die Grenzstreuschaufeln 77 weisen an ihrem äußeren Ende jeweils den Schwenkflügel 76 auf, mittels derer sich auf einfache Weise auch beim Spätdüngen das Grenzstreuen (Streubild mit steil abfallender Streuflanke) erreichen läßt. Die Grenzstreuschaufeln 77 gemäß Fig. 9 können auch zum Reihenstreuen in Verbindung mit einer nicht dargestellten Reihenstreuvorrichtung eingesetzt werden. Hierdurch ergibt sich der Vorteil, daß die Düngerpartikel innerhalb der Reihenstreuvorrichtung mit relativ geringer Geschwindigkeit gleichmäßig über die Reihenstreuvorrichtung verteilt werden, so daß sämtlichen Ausläufen der Reihenstreuvorrichtung die gleiche Düngermenge schonend zugeführt wird.

Die nicht benötigten Grenzstreuschaufeln 77 werden beim Normal streuen, wenn die Streuschaufeln 44 und 45 zum Einsatz kommen, an der Halterung 78 gemäß Fig. 1 mittels des Schnellverschlusses 52 angeordnet. Wenn die Grenzstreuschaufeln 77 zum Einsatz kommen, werden an der Halterung 78 die Normalstreuschaufeln 44 und 45 befestigt und sicher mitgeführt. Anstelle der Halterung 78 kann auch die mit strichpunktierten Linien angedeutete Halterung 79 auf der Rückseite des Schleuderdüngerstreuers an besonders gut zugänglicher Stelle vorgesehen sein. Hierdurch werden die Wechsel-Wurfschaufeln an der Maschine fest gelagert und sind schnell zur Montage auf den Schleuderscheiben 6 und 7 bereit.

Wie bereits vor gesagt, befinden sich auf den Schleuderscheiben 6 und 7 jeweils die Wurfschaufeln 44 und 45 zum Normaldüngen. In Fig. 10 ist die Schleuderscheibe 6 im Schnitt mit der langen Wurfschaufel 45 dargestellt. Hierbei befindet sich der Schwenkflügel 76 der langen Normalstreuschaufel 45 in Normaldüngungsposition. Die Normaldüngungsposition des Schwenkflügels 76 wird durch den Anschlag 80 bestimmt. Um das Spätdüngen durchführen zu können, wird der Schwenkflügel in die Position 76' geschwenkt. Diese Position wird durch den Anschlag 81 bestimmt. Dadurch, daß der Schwenkflügel sich in der Position 76' befindet, wird der Dünger mit einem größeren Abwurfwinkel abgeschleudert, so daß der Streufächer der von den Wurfschaufeln 44 und 45 erzeugt wird, etwas angehoben wird, so daß der Dünger über das bereits hoch aufgewachsene Getreide gleichmäßig verteilt wird. Selbstverständlich werden die Schwenkflügeln bei allen Wurfschaufeln zum Spätdüngen hochgeschwenkt.

Wenn der Schleuderdüngerstreuer zum Grenzstreuen eingesetzt wird, werden, wie bereits anhand der Fig. 9 beschrieben ist, die Normalstreuschaufeln 44 und 45 gegen die Grenzstreuschaufeln 77 ausgetauscht. Beim Grenzstreuen bei der Normaldüngung befindet sich der Schwenkflügel 76 in der in Fig. 12 dargestellten Position. Diese Position 76 wird durch den Anschlag 80 ebenfalls bestimmt. Wenn das Grenzstreuen beim Spätdüngen durchgeführt wird, wird der Schwenkflügel in die in Fig. 13 dargestellte Position 76' geschwenkt, so daß beim Spätdüngen beim Grenzstreuen ebenfalls der Streufächer anhebbar ist. Bei den Wurfschaufeln 44 und 45 der Schleuderscheibe 7, die zum Feldinneren streut, werden die Schwenkflügel beim - Spätdüngen ebenfalls gemäß Fig. 11 in die Position 76' geschwenkt. Die Position 76' wird durch den Anschlag 81 bestimmt.

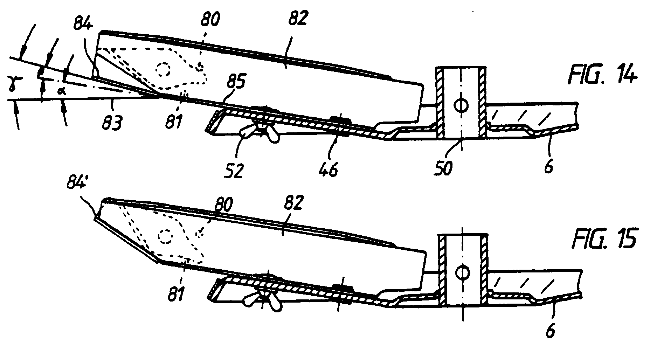

Um mit dem Schleuderdüngerstreuer gemäß Fig. 1, bei dem bauartbedingt die Länge der Wurfschaufeln zur Erzielung größerer Wurfweiten nicht vergrößerbar ist, eine größere Wurfweite als mit den in Fig. 5, 10 und 11 dargestellten Wurfschaufeln zu erzielen, wird die längere Wurfschaufel 45 gegen die in Fig. 14, 15 und 16 dargestellten Wurfschaufeln 82 ausgetauscht. Die Wurfschaufeln 44 und 45 gemäß den Fig. 5, 10 und 11 sind mit einem Winkel α von etwa 10° zur Horizontalen 83 eingestellt. Um eine größere Wurfweite zu erzielen, ist die untere, äußere Fläche 84 der Wurfschaufeln 82 um den Winkel β von 6° gegenüber dem inneren unteren Steg 85 in der untersten Stellung angestellt. Nur die längere Breitstreuschaufel 82 ist an ihrem äußeren Ende durch die Anstellung der unteren Fläche 84 mit diesem Vorwinkel β versehen, während die untere, äußere Fläche 88 der als innere Breitstreuschaufel arbeitenden Schaufel 44, die der kürzeren Normalstreuschaufel 44 entspricht, mit dem Schaufelwinkel α gegenüber der Horizontalen 83 angestellt ist. Die längere Breitstreuschaufel 82 weist an ihrem äußeren Ende durch die grundsätzliche Anstellung der unteren Fläche 84 in ihrer untersten Stellung den Abwurfwinkel γ von 16° zur Horizontalen 83 auf, während die äußere Fläche 86 der kürzeren Wurfschaufel 44 einen Abwurfwinkel α von 10° zur Horizontalen 83 aufweist. Somit weist also die untere Leitfläche 84 der Wurfschaufel 82 einen größeren Winkel γ zur Horizontalen 83 auf als die kürzere Wurfschaufel 44. Somit sind auf der Schleuderscheibe 6 und 7 zum Erzielen größerer Arbeitsbreiten also Wurfschaufeln 82 und 44 angeordnet, die an ihren Abwurfenden mit unterschiedlichen Winkeln σ und γ zur Horizontalen 83 angestellte Leitflächen 84 und 86 aufweisen. Hierbei ist die untere äußere Leitfläche 84 der längeren Wurfschaufel 82 mit einem größeren Winkel γ zur Horizontalen 83 als die untere äußere Leitfläche 86 der kürzeren Wurfschaufel 44 angestellt.

Die äußeren Leitflächen 84 und 86 sind in aufrechter Ebene verschwenkbar an den Wurfschaufeln 82 und 44 befestigt, wobei die beiden Positionen durch die Anschläge 80 und 81 bestimmt werden. Die äußeren Leitflächen 84 und 86 lassen sich zur Durchführung der Spätdüngung nach oben verschwenken.

Dadurch, daß die unteren Leitflächen 84 und 86 der Breitstreuschaufeln 82 und 44 in unterschiedlichen Winkeln zur Horizontalen angestellt sind und somit unterschiedliche Abwurfwinkel aufweisen, werden die Düngerpartikel von den Wurfschaufeln 82 und 44 in zwei unterschiedlichen Ebenen abgeschleudert, so daß sich die von jeder Wurfschaufel 82 und 44 erzeugten Streufächer in übereinanderliegenden Ebenen befinden.

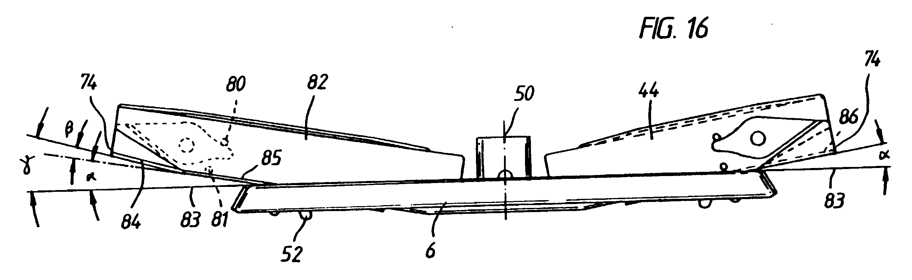

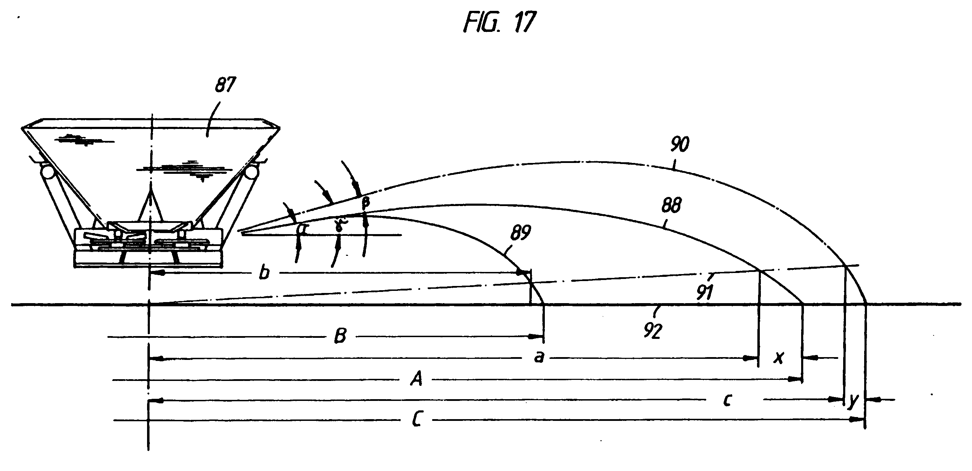

Die Fig. 17 zeigt in Prinzipdarstellung die unterschiedliche Arbeits- bzw. Streuweise der Wurfschaufeln 44 bzw. 45 gemäß den Fig. 5 und 10 einerseits und den Wurfschaufeln 82 bzw. 44 gemäß den Fig. 14 und 16 andererseits. Der Schleuderdüngerstreuer, der mit 87 bezeichnet ist, entspricht dem Schleuderdüngerstreuer gemäß Fig. 1 und weist entsprechend die beiden Schleuderscheiben 6 und 7 mit den Wurfschaufeln 44 und 45 bzw. nach einem Austausch der Wurfschaufeln 45 die Wurfschaufeln 44 und 82 auf. Wenn der Schleuderdüngerstreuer 87 mit den Wurfschaufeln 44 und 45 entsprechend den Fig. 5 und 10 ausgestattet ist, wird der Dünger über über die Wurfbahn 88 mit der langen Schaufel 45 bis an den Rand der maximalen Wurfweite A geworfen, während die kurze Wurfschaufel 44 den Dünger maximal bis zu der Wurfweite B entsprechend der Wurfbahn 89 wirft. Bei dieser Arbeitsweise werden die Düngerpartikel von den beiden Wurfschaufeln 44 und 45 mit dem Abwurfwinkel α abgeworfen.

Wenn der Schleuderdüngerstreuer 87 mit den Wurfschaufeln 82 und 44 gemäß Fig. 16 eingesetzt wird, werden die Düngerpartikel über den inneren Bereich von der kürzeren Wurfschaufel 44 entsprechend der Wurfbahn 89 abgeworfen, während sie von der langen Wurfschaufel 82 entsprechend der Wurfbahn 90 bis zu der größeren Wurfweite C abgeworfen werden und den äußeren Bereich des erzeugten Streubildes bestreuen.

Somit ist leicht einzusehen, daß durch den größeren Abwurfwinkel γ der längeren Wurfschaufel 82 auf einfachste Weise eine größere Wurfweite ohne weiteres zu erreichen ist. Gleichzeitig wird, wie die Fig. 17 zeigt, hierdurch der Schleuderdüngerstreuer und das damit erzielte Streubild unempfindlicher gegen Querschwankungen. Wenn beispielweise, wie in Fig. 17 mit der strichpunktierten Linie 91 angedeutet ist, sich der Boden, der durch die durchgehende Linie 92 gekennzeichnet ist, durch Querschwankungen vom rechten Winkel abweichend zu dem Schleuderdüngerstreuer 87 einstellt, ändert sich die erzielbare Wurfweite. So reduziert sich für die von der kürzeren Wurfschaufel 44 abgeworfenen Düngerpartikel die Wurfweite von B auf b, während sich die Wurfweite A für die von der längeren Wurfschaufel 45 entsprechend der Wurfbahn 88 abgeworfenden Düngerpartikel auf die Wurfweite a reduziert. Wenn über größere Arbeitsbreiten mit der Wurfschaufel 82 gemäß Fig. 14 gearbeitet wird, reduziert sich die Wurfweite jedoch nur von der Wurfweite C auf die Wurfweite c. Somit ist also ohne weiteres einzusehen, daß in überraschender Weise die Wurfweite sich wesentlich weniger ändert.

### Zusammenfassend läßt sich folgendes sagen:

Man kann ohne weiteres feststellen, daß die Wurfweitenabweichung (Differenz zwischen A und a einerseits und C und c andererseits) unterschiedlich ist. Die Differenz y ist bei der größeren Wurfweite C deutlich geringer als die Differenz x bei der Wurfweite A. Darüber hinaus wird mit diesem Vorteil gleichzeitig auch die Wurfweite und somit die Arbeitsbreite wesentlich größer, wobei vorausgesetzt wird, daß die Umfangsgeschwindigkeit der äußeren Kante der Wurfschaufel und somit die Abwurfgeschwindigkeit der Düngerpartikel jeweils unverändert bleibt. Entscheidend ist, daß bei der größeren Wurfweite C der Streufächer gegenüber Querschwankungen des Schleppers bzw. der Maschine oder Querneigungen des Hanges unempfindlich sind. Es hat sich gezeigt, daß sich somit also die sich sonst gerade im Außenbereich des Streufächers natürlich wesentlich stärker auswirkenden Querschwankungen, die Streubildungleichmäßigkeiten zur Folge haben, sich bei dem erfindungsgemäßen Verfahren nicht so stark mehr auswirken. Außerdem wird, da der Streufächer nur geringfügig angehoben zu werden braucht, der Windeinfluß nicht wesentlich vergrößert; er wird weiterhin so gering wie möglich gehalten, da nur sehr kleine Winkel α bzw. γ gegenüber der Horizontalen 83 sowohl für die kurze 44 als auch für die lange Schaufel 82 verwirklicht werden. Außerdem ist vorteilhaft, daß sich die von der kürzeren und längeren Wurfschaufel jeweils erzeugten Streufächer in zwei übereinanderliegenen Ebenen befinden.

## Patentansprüche

1. Schleuderdüngerstreuer mit einem Rahmen und einem Vorratsbehälter, unter dem zumindest zwei rotierend angetriebene Schleuderscheiben angeordnet sind, wobei auf jeder Schleuderscheibe (6, 7) zwei Wurfschaufeln (44, 45, 73, 77, 82) unterschiedlicher Länge angeordnet sind, deren Abstreukanten einen unterschiedlichen Abstand zur Drehachse haben und wobei jede Wurfschaufel eine innere und eine äußere untere Leitfläche aufweist und (44, 45, 73, 77, 82) wobei die Wurfschaufeln an ihren Abwurfenden (74) die unteren äußeren Leitflächen (84, 86) aufweisen, die mit unterschiedlichen Winkeln (α,γ) nach oben gegenüber der Horizontalen angestellt sind, wobei
die untere äußere Leitfläche (84) der längeren Wurfschaufel (82) in der untersten Abwurfposition mit einem größeren Winkel als die untere äußere Leitfläche (86) der kürzeren Wurfschaufeln (44) in der untersten Abwurfposition angestellt ist.

2. Schleuderstreuer nach Anspruch 1, dadurch gekennzeichnet, daß die Wurfschaufeln (44,45,73,77,82) in Scheibenebene winkelverschwenkbar angeordnet sind, daß im Bereich der winkelverschwenkbaren Wurfschaufeln (44,45,73,77,82) Einsteilskalen (58,59) für die Wurfschaufeln (44,45,73,77,82) auf den Schleuderscheiben (6,7) bzw. am Rand (57) der Schleuderscheibe (6,7) vorgesehen sind.

3. Schleuderdüngerstreuer Anspruch 1 oder 2, dadurch gekennzeichnet, daß die jeweils auf den Schleuderscheiben (6,7) angeordneten Wurfschaufeln (44,45,73,77,82), insbesondere die Normal-, Breit- oder Standardstreuschaufeln mit ihrem Abstreuende (74) einen unterschiedlichen radialen Abstand zur Drehachse (50) aufweisen.

4. Schleuderdüngerstreuer nach einem oder mehreren der vorstehenden Ansprüche, dadurch gekennzeichnet, daß der Schnellverschluß als Knebelschraube (53) oder Knebelmutter (52) ausgebildet ist, und daß die Wurfschaufeln (44,45,73,77,82) mittels des Schnellverschlusses winkelverstellbar sind.

5. Schleuderdüngerstreuer nach einem oder mehreren der vorstehenden Ansprüche, dadurch gekennzeichnet, daß die Wurfschaufeln (44,45,73,77,82) mittels Knebelschrauben (52,53) werkzeuglos verstellbar bzw. einstellbar auf den Schleuderscheiben (6,7) angeordnet sind.

6. Schleuderdüngerstreuer nach einem oder mehreren der vorstehenden Ansprüche, dadurch gekennzeichnet, daß die Knebelschraube (52,53) unter der Schleuderscheibe (6,7) angeordnet ist.

7. Schleuderdüngerstreuer nach einem oder mehreren der vorstehenden Ansprüche, dadurch gekennzeichnet, daß je Wurfschaufel (44,45,73,77,82) nur eine Knebelschraube (52,53) vorgesehen ist, wobei diese Knebelschraube (52,53) in der Nähe des äußeren Randes (57) der Scheibe (6,7) angeordnet ist, und daß die Wurfschaufel (44,45,73,77,82) auf ihrer der Drehachse (50) zugewandten Seite in ihrem unteren Steg (48) einen in radialer Richtung nach innen verlaufenden offenen Schlitz (49) aufweist, und daß auf der Schleuderscheibe (6,7) ein Bolzen (46) angeordnet ist, auf dem die Wurfschaufel (44,45,73,77,82) mit dem Schlitz (49) jeweils aufschiebbar ist.

8. Schleuderdüngerstreuer nach einem oder mehreren der vorstehenden Ansprüche, dadurch gekennzeichnet, daß eine oder mehrere Breitstreuschaufeln (44,45,82) zum Austausch vorgesehen sind, deren äußerer unterer Flügel (84) um zumindest 4° bis 10°, vorzugsweise 6° nach oben gegenüber dem inneren unteren Steg (85) in der untersten Stellung eingestellt ist.

9. Verfahren zum Einsatz eines Schleuderdüngerstreuers nach Anspruch 1, dadurch gekennzeichnet, daß die Wurfschaufeln (44,45,73,77,82) einer Schleuderscheibe (6,7) unterschiedliche Längen von der Drehachse (50) bis zu ihrer Abstreukante (74) aufweisen, daß für den Schleuderdüngerstreuer gegeneinander austauschbare Wurfschaufeln vorgesehen sind, daß zumindest die längere Wurfschaufel (45) gegen eine andere Wurfschaufel (82) leicht austauschbar ist, welche zumindest an ihrem äußeren Ende eine untere Leitfläche (84) aufweist, welche einen größeren Winkel (γ) zur Horizontalen (83) aufweist.

10. Verfahren zum Einsatz eines Schleuderdüngerstreuers nach einem oder mehreren der Ansprüche 1 bis 9, dadurch gekennzeichnet, daß zumindest für eine der beiden Schleuderscheiben (6,7) austauschbare Wurfschaufeln (73,77) zum Erzielen eines an der seitlichen Streuflanke steil abfallenden Streubildes (sog. Grenzstreuschaufeln) gegen die zum Normalstreuen vorgesehenen Streuschaufeln (44,45,82) zum Erzielen eines Streubildes mit seitlich flach abfallenden Streuflanken (sog. Normal-, Breit- oder Standardschaufeln) vorgesehen sind, daß die Wurfschaufeln (44,45,73,77,82) mittels eines Schnellverschlusses (52) auswechselbar auf den Schleuderscheiben (6,7) angeordnet sind.

## Claims

1. Centrifugal fertiliser spreader, including a frame and a hopper, beneath which are disposed at least two rotatably driven centrifugal discs, two throwing vanes (44, 45, 73, 77, 82) of different lengths being disposed on each centrifugal disc (6, 7), with the dispersing edges of the throwing vanes having different distances from the rotary axle and each of the throwing vanes (44, 45, 73, 77, 82) having an inner and an outer lower guide face, and the throwing vanes having the lower outer guide faces (84, 86) at their discharge ends (74), which faces are orientated upwardly relative to the horizontal at different angles (α, γ), the lower outer guide face (84) of the longer throwing vane (82) in the lowermost discharge position being orientated at a greater angle than the lower outer guide face (86) of the shorter throwing vanes (44) in the lowermost discharge position.

2. Centrifugal fertiliser spreader according to claim 1, characterised in that the throwing vanes (44, 45, 73, 77, 82) are disposed in the plane of the discs in an angularly pivotable manner, and in that graduated scales (58, 59) for the throwing vanes (44, 45, 73, 77, 82) are provided in the region of the angularly pivotable throwing vanes (44, 45, 73, 77, 82) on the centrifugal discs (6, 7) or respectively on the edge (57) of the centrifugal disc (6, 7).

3. Centrifugal fertiliser spreader according to claim 1 or 2, characterised in that the throwing vanes (44, 45, 73, 77, 82), more especially the normal, wide or standard dispersing vanes, which are each disposed on the respective centrifugal discs (6, 7), are spaced with their dispersing end (74) at variable radial spacings from the rotary axle (50).

4. Centrifugal fertiliser spreader according to one or more of the preceding claims, characterised in that the high-speed closure is a toggle screw (53) or toggle nut (52), and in that the throwing vanes (44, 45, 73, 77, 82) are angularly adjustable by means of the high-speed closure.

5. Centrifugal fertiliser spreader according to one or more of the preceding claims, characterised in that the throwing vanes (44, 45, 73, 77, 82) are disposed on the centrifugal discs (6, 7) by means of toggle screws (52, 53) so as to be displaceable or adjustable without any tools.

6. Centrifugal fertiliser spreader according to one or more of the preceding claims, characterised in that the toggle screw (52, 53) is disposed beneath the centrifugal disc (6, 7).

7. Centrifugal fertiliser spreader according to one or more of the preceding claims, characterised in that only one toggle screw (52, 53) is provided per throwing vane (44, 45, 73, 77, 82), this toggle screw (52, 53) being disposed in the vicinity of the outer edge (57) of the disc (6, 7), and in that the throwing vane (44, 45, 73, 77, 82) has, on its side facing the rotary axle (50) in its lower cross-piece member (48), an open slot (49) which extends inwardly in the radial direction, and in that a bolt (46) is disposed on the centrifugal disc (6, 7), the throwing vane (44, 45, 73, 77, 82) with the slot (49) being slidable over said bolt.

8. Centrifugal fertiliser spreader according to one or more of the preceding claims, characterised in that one or more wide dispersing vanes (44, 45, 82) are intended to be exchanged, the outer lower vane (84) of which is set upwardly by at least 4° to 10°, preferably 6°, relative to the inner lower cross-piece member (85) in the lowermost position.

9. Method of using a centrifugal fertiliser spreader according to claim 1, characterised in that the throwing vanes (44, 45, 73, 77, 82) of a centrifugal disc (6, 7) have different lengths from the rotary axle (50) to their dispersing edge (74), in that interchangeable throwing vanes are provided for the centrifugal fertiliser spreader, and in that at least the longer throwing vane (45) is easily interchangeable with another throwing vane (82) which, at least at its outer end, has a lower guide face (84), which has a greater angle (γ) relative to the horizontal (83).

10. Method of using a centrifugal fertiliser spreader according to one or more of claims 1 to 9, characterised in that interchangeable throwing vanes (73, 77) are provided for at least one of the two centrifugal discs (6, 7) in order to achieve a dispersion pattern, which is steeply inclined at the lateral dispersion wall (so-called boundary dispersion vanes) relative to the dispersing vanes (44, 45, 82), which are provided for the normal dispersion process, in order to achieve a dispersion pattern having laterally gently inclined dispersion walls (so-called normal, wide or standard vanes), and in that the throwing vanes (44, 45, 73, 77, 82) are disposed on the centrifugal discs (6, 7) so as to be interchangeable by means of a high-speed closure (52).

## Revendications

1. Epandeur centrifuge d'engrais comprenant un châssis et un réservoir sous lequel se trouvent au moins deux disques d'épandage entraînés en rotation, chaque disque d'épandage (6, 7) comportant deux palettes d'éjection (44, 45, 73, 77, 82) de longueurs différentes, dont les arêtes d'éjection se trouvent à une distance différente de l'axe de rotation et chaque palette d'éjection présente une surface de guidage inférieure intérieure et extérieure (44, 45, 73, 77, 82) et les palettes d'éjection comportent au niveau de leur extrémité d'éjection (74), des surfaces de guidage (84, 86) extérieures inférieures qui peuvent être réglées avec des angles montants différents (α, γ) par rapport la direction horizontale, la surface de guidage extérieure inférieure (84) de la palette d'éjection longue (82) en position d'éjection inférieure étant réglée avec un angle plus grand que la surface de guidage extérieure inférieure (86) des palettes d'éjection (44) plus courtes dans la position d'éjection inférieure.

2. Epandeur centrifuge d'engrais selon la revendication 1, caractérisé en ce que
les palettes d'éjection (44, 45, 73, 77, 82) sont montées de manière à pivoter angulairement dans le plan du disque, dans la zone des palettes d'éjection basculant angulairement (44, 45, 73, 77, 82), il y a des échelles de réglage (58, 59) pour les palettes d'éjection (44, 45, 73, 77, 82) sur les disques d'épandage (6, 7) ou sur le bord (57) des disques d'épandage (6, 7).

3. Epandeur centrifuge d'engrais selon la revendication 1 ou 2,
caractérisé en ce que
les palettes d'éjection (44, 45, 73, 77, 82) prévues chaque fois sur les disques d'épandage (6, 7) notamment les palettes d'épandage normal, larges ou standard, ont une extrémité d'éjection (74) présentant une distance radiale différente par rapport à l'axe de rotation (50).

4. Epandeur centrifuge d'engrais selon l'une ou plusieurs des revendications précédentes,
caractérisé en ce que
la liaison rapide est réalisée sous la forme de vis-papillon (53) ou d'écrou-papillon (52) et les palettes d'éjection (44, 45, 73, 77, 82) sont réglables angulairement par le moyen de liaison rapide.

5. Epandeur centrifuge d'engrais selon l'une quelconque des revendications précédentes,
caractérisé en ce que
les palettes d'éjection (44, 45, 73, 77, 82) sont réglables ou modifiables sans outil à l'aide des écrous-papillons (52, 53) sur les disques d'épandage (6, 7).

6. Epandeur centrifuge d'engrais selon l'une ou plusieurs des revendications précédentes,
caractérisé en ce que
la vis-papillon (52, 53) se trouve sous le disque d'épandage (6, 7).

7. Epandeur centrifuge d'engrais selon l'une ou plusieurs des revendications précédentes,
caractérisé en ce que
• chaque palette d'éjection (44, 45, 73, 77, 82) n'est associée qu'une vis-papillon (52, 53), cette vis (52, 53) se trouvant à proximité du bord extérieur (57) du disque (6, 7) et
• les palettes d'éjection (44, ,45, 73, 77,,82) ayant sur leur côté tourné vers l'axe de rotation (50), dans leur branche inférieure (48), une fente (49) radiale, ouverte vers l'intérieur, et
• sur le disque d'épandage (6, 7), il y a un goujon (46) sur lequel se glisse la palette d'éjection (44, 45, 73, 77, 82) avec la fente (49).

8. Epandeur centrifuge d'engrais selon l'une ou plusieurs des revendications précédentes,
caractérisé en ce que
par une ou plusieurs palettes d'épandage larges (44,45, 82) pour l'échange, dont l'ailette inférieure extérieure (84) peut se régler au moins de 4° à 10° de préférence de 6° vers le haut par rapport à la branche inférieure intérieure (85) dans la position la plus inférieure

9. Procédé d'utilisation d'un épandeur centrifuge d'engrais selon la revendication 1,
caractérisé en ce que
• les palettes d'éjection (44, 45, 73, 77, 82) d'un disque d'épandage (6, 7) ont des longueurs différentes par rapport à l'axe de rotation (50) jusqu'à leur arête d'éjection (74), des palettes d'éjection échangeables étant prévues pour l'épandeur centrifuge d'engrais,
• au moins la palette d'éjection la plus longue (45) pouvant s'échanger facilement contre une autre palette d'éjection (82) ayant au moins à son extrémité extérieure une surface de guidage inférieure (84) présentant l'angle de plus grand (γ) par rapport à la direction horizontale (83).

10. Procédé d'utilisation d'un épandeur centrifuge d'engrais selon l'une ou plusieurs des revendications 1 à 9,
caractérisé en ce qu'
au moins pour l'un des deux disques d'épandage (6, 7), il y a des palettes d'éjection (73, 77) échangeables pour réaliser une image d'épandage chutant brusquement vers le côté du flanc d'épandage (palette d'épandage en limite de champ) pour être remplacée par des palettes d'épandage (44, 45, 82) pour l'épandage normal pour réaliser une image d'épandage avec des flancs d'épandage descendant latéralement en douceur (palette d'épandage normal, large ou standard) et les palettes d'éjection (44, 45, 73, 77, 82) sont montées de manière échangeable sur les disques d'épandage (6, 7) à l'aide d'un moyen de fermeture rapide (52).
